# EUROPEAN PATENT APPLICATION

(11) **EP 4 582 972 A2**
(43) Date of publication of application: **09.07.2025**
(21) Application number: 25171911.8
(22) Date of filing: 14.11.2018
(51) Int. Cl.: G06F 16/28

(54) **INTERACTIVE REPRESENTATION OF CONTENT FOR RELEVANCE DETECTION AND REVIEW**

(30) Priority: 18.11.2017 US 201762588336 P
(62) Divisional of application: 18815870.3
(71) Applicant: Cogi, Inc., Santa Ynez, CA 93460 (US)
(72) Inventor: Cromack, Mark, Robert, Santa Ynez, CA 93460 (US)
(74) Representative: Klickow & Wetzel PartGmbB

(57) **Abstract**

A content extraction and display process which process may include various functionality for segmenting content into analyzable portions, ranking relevance of content within such segments, and displaying highly ranked extractions in graphical cloud form. The graphical cloud in some embodiments will dynamically and synchronously update as the content is played back or acquired. Extracted elements maybe in the form of words, phrases, audio sequences, nonverbal visual segments or icons as well as a host of other information communicating data objects expressible by graphical display.

## Description

### BACKGROUND

The specification relates to extracting important information from audio, visual, and text-based content, and in particular displaying extracted information in a manner that supports quick and efficient content review.

Audio, video and/or text-based content has become increasingly easy to produce and deliver. In many business, entertainment and personal use scenarios more content than can be easily absorbed and processed is presented to users, but in many cases only portions of the content is actually pertinent and worthy of actual concentrated study. Systems such as the COGl^{®} system produced by the owner of this disclosure provide tools to identify and extract important portions of A/V content to save user time and effort. Further levels of content analysis and information extraction may be beneficial and desirable to users.

### SUMMARY

Example embodiments described herein have innovative features, no single one of which is indispensable or solely responsible for their desirable attributes. Without limiting the scope of the claims, some of the advantageous features will now be summarized.

In some embodiments, a content extraction and display process may be provided. Such a process may include various functionality for segmenting content into analyzable portions, ranking relevance of content within such segments and across such segments, and displaying highly ranked extractions in Graphical Cloud form. The Graphical Cloud in some embodiments will dynamically update as the content is played back, acquired, or reviewed. Extracted elements maybe in the form of words, phrases, non-verbal visual elements or icons as well as a host of other information communicating data objects compatible with graphical display.

In this disclosure, Cloud Elements are visual components that make up the Graphical Cloud, Cloud Lenses define the set of potential Cloud Elements that may be displayed, and Cloud Filters define the ranking used to prioritize which Cloud Elements are displayed.

A process may be provided for extracting and displaying relevant information from a content source, including: acquiring content from at least one of a real-time stream or a pre-recorded store; specifying a Cloud Lens defining at least one of a segment duration or length, wherein the segment comprises at least one of all or a subset of at least one of a total number of time or sequence ordered Cloud Elements; applying at least one Cloud Filter to rank the level of significance of each Cloud Element associated with a given segment; defining a number of Cloud Elements to be used in a Graphical Cloud for a given segment based on a predetermined Cloud Element density selected; constructing at least one Graphical Cloud comprising a visualization derived from the content that is comprised of filtered Cloud Elements; and, scrolling the Cloud Lens through segments to display the Graphical Cloud of significant Cloud Elements.

In one embodiment, Cloud Elements may be derived from source content through at least one of transformation or analysis and include at least one of graphical elements including words, word phrases, complete sentences, icons, avatars, emojis, representing words or phrases at least one of spoken or written, emotions expressed, speaker's intent, speaker's tone, speaker's inflection, speaker's mood, speaker change, speaker identifications, object identifications, meanings derived, active gestures, derived color palettes, or other material characteristics that can be derived through transformational and analysis of the source content or transformational content. In another embodiment, scrolling may be performed through segments, where segments are defined by either consecutive or overlapping groups of Cloud Elements.

In one embodiment, Cloud Filters may include at least one of Cloud Element frequency including number of occurrences within the specified Cloud Lens segment, the number of occurrences across the entire content sample, word weight, complexity including number of letters, syllables, etc., syntax including grammar-based, part-of-speech, keyword, terminology extraction, word meaning based on context, sentence boundaries, emotion, or change in audio or video amplitude including loudness or level variation. In another embodiment, the content may include at least one of audio, video or text. In one embodiment, the content is at least one of text audio, and video, and the audio/video is transformed to text, using at least one of transcription, automated transcription or a combination of both.

In another embodiment, transformations and analysis may determine at least one of Element Attributes or Element Associations for Cloud Elements, which support the Cloud Filter ranking of Cloud Elements including part-of-speech tag rank, or when present, may form the basis to combine multiple, subordinate Cloud Elements into a single compound Cloud Element. In one embodiment, text Cloud Elements may include at least one of Element Attributes comprising a part-of-speech tag including for English language, noun, proper noun, adjective, verb, adverb, pronoun, preposition, conjunction, interjection, or article.

In another embodiment, text Cloud Elements may include at least one of Element Associations based on at least one of a part-of-speech attribute including noun, adjective, or adverb and its associated word Cloud Element with a corresponding attribute including pronoun, noun or adjective. In one embodiment, Syntax Analysis to extract grammar based components may be applied to the transformational output text comprising at least one part-of-speech, including noun, verb, adjective, and others, parsing of sentence components, and sentence breaking, wherein Syntax Analysis includes tracking indirect references, including the association based on parts-of-speech, thereby defining Element Attributes and Element Associations.

In another embodiment, Semantic Analysis to extract meaning of individual words is applied comprising at least one of recognition of proper names, the application of optical character recognition (OCR) to determine the corresponding text, or associations between words including relationship extraction, thereby defining Element Attributes and Element Associations. In one embodiment, Digital Signal Processing may be applied to produce metrics comprising at least one of signal amplitude, dynamic range, including speech levels and speech level ranges (for audio and video), visual gestures (video), speaker identification (audio and video), speaker change (audio and video), speaker tone, speaker inflection, person identification (audio and video), color scheme (video), pitch variation (audio and video) and speaking rate (audio and video).

In another embodiment, Emotional Analysis may be applied to estimate emotional states. In one embodiment, the Cloud Filter may include: determining an element-rank factor assigned to each Cloud Element, based on results from content transformations and Natural Language Processing analysis, prioritized part-of-speech Element Attributes from highest to lowest: proper nouns, nouns, verbs, adjectives, adverbs, and others; and applying the element-rank factor to the frequency and complexity Cloud Element significance rank already determined for each word element in the Graphical Cloud.

In another embodiment, the process may further include implementing a graphical weighting of Cloud Elements, including words, word-pairs, word-triplets and other word phrases wherein muted colors and smaller fonts are used for lower ranked elements and brighter colors and larger font schemes for higher ranked elements, with the most prominent Cloud Elements based element-ranking displayed in the largest, brightest, most pronounced graphical scheme. In one embodiment, as the Cloud Lens is scrolled through the content, the segments displayed may be at least one of consecutive, with the end of one segment is the beginning of the next segment, or overlapping, providing a substantially continuous transformation of the resulting Graphical Cloud based on an incrementally changing set of Cloud Elements depicted in the active Graphical Cloud.

In another embodiment, the process may further include combining a segment length defined by the Cloud Lens with a ranking criteria for the Cloud Filter to define the density of Cloud Elements within a displayed segment. In one embodiment, the Cloud Filter may include assigning highest ranking to predetermined keywords. In another embodiment, predetermined visual treatment may be applied to display of keywords. In one embodiment, each element displayed in the Graphical Cloud may be synchronized with the content, whereby selecting a displayed element will cause playback or display of the content containing the selected element.

In one embodiment the Cloud Filter portion of the process includes determining an element-rank factor assigned to each Cloud Element, based on results from content transformations including automatic speech recognition (ASR) confidence scores and/or other ASR metrics for audio and video based content; and applying the element-rank factor to the Cloud Element significance rank already determined for each word element in the Graphical Cloud.

### BRIEF DESCRIPTION OF THE DRAWINGS

Aspects and advantages of the embodiments provided herein are described with reference to the following detailed description in conjunction with the accompanying drawings. Throughout the drawings, reference numbers may be re-used to indicate correspondence between referenced elements. The drawings are provided to illustrate example embodiments described herein and are not intended to limit the scope of the disclosure.
FIG. 1 illustrates an example flow diagram of a Graphical Cloud system.
FIG. 2 illustrates an example Graphical Cloud derived from the teachings of the disclosure.
FIG. 3 illustrates an example non-English Graphical Cloud derived from the teachings of the disclosure.
FIG. 4 illustrates example could elements.
FIG. 5 illustrates an example video display of a Graphical Cloud.
FIG. 6 illustrates an alternative example video display of a Graphical Cloud.
FIG. 7 illustrates an example audio display of a Graphical Cloud.
FIG. 8 illustrates an example time sequencing of Graphical Cloud display as content is played, reviewed, or acquired.

### DETAILED DESCRIPTION OF ILLUSTRATIVE EMBODIMENTS

Generally, the embodiments described herein are directed toward a system to create an interactive, graphical representation of content through the use of an appropriately configured lens and with the application of varied, functional filters, resulting in a less noisy, less cluttered view of the content due to the removal or masking of redundant, extraneous and/or erroneous content. The relevance of specific content is determined in real-time by the user, which allows that user to efficiently derive value. That value could be extracting the overall meaning from the content, identification of a relevant portion of that content for a more thorough review, a visualization of a "rolling abstract" moving through the content, or the derivation of other useful information sets based on the utilization of the varied lens and filter embodiments.

It is understood that the following description of the various elements that work together to produce the results disclosed herein are implemented as program sequences and/or logic structures instantiated in any combination of digital and analog electronics, software executing on processors, and user/interface display capability commonly found in electronic devices such as desktop computers, laptops, smartphones, tablets and other like devices. Specifically the processes described herein may be implemented as modules or elements that may be a programmed computer method or a digital logic method and may be implemented using a combination of any of a variety of analog and/or digital discrete circuit components (transistors, resistors, capacitors, inductors, diodes, etc.), programmable logic, microprocessors, microcontrollers, application-specific integrated circuits, or other circuit elements. A memory configured to store computer programs or computer-executable instructions may be implemented along with discrete circuit components to carry out one or more of the methods described herein. In general, digital control functions, data acquisition, data processing, and image display/analysis may be distributed across one or more digital elements or processors, which may be connected, wired, wirelessly, and/or across local and/or non-local networks.

### GLOSSARY OF TERMS

▪ **Content.** Content can include various multimedia sources including, but not limited to, audio, video and text-based media. Content can be available via a streaming source for real-time use, or that content can be already available for use.
▪ **Graphical Cloud.** Graphical Clouds are visualizations derived from the content that are comprised of various Cloud Elements (e.g. words, phrases, icons, avatars, emojis, etc.) depicted in a user-friendly manner, removing irrelevant, lower priority or lower ranking elements based on the defined and selected Cloud Filters. Cloud Filters and Cloud Lenses control the types, quantity, and density of Cloud Elements depicted in the Graphical Cloud. In different embodiments and for select media types, the Graphical Cloud variations represent changes in content displayed to the user over time or sequence, and that time period or sequence length can vary and can be either segmented or overlapped.
▪ **Cloud Analysis.** Cloud Analyses are techniques applied to the source content or other derived content based on transformation of the source content (e.g. analysis performed on words extracted via automatic speech recognition from the source audio). Example techniques include natural language processing, computational linguistic analysis, automatic language translation, digital signal processing, and many others. These techniques extract elements, attributes and/or associations forming new Cloud Elements, Element Attributes and/or Element Associations for compound Cloud Elements.
▪ **Cloud Element.** Cloud Elements are derived from source content through some level of transformation or analysis and include graphical elements such as words, word phrases, complete sentences, icons, avatars, emojis, to name a few, representing words or phrases spoken or written, emotions or sentiments expressed, speaker's or actor's intent, tone or mood, meanings derived, speaker or actor identifications, active gestures, derived color palettes, or other material characteristics that can be derived through analysis of the source content. Compound Cloud Elements are a collection of Cloud Elements, constructed based on the Element Attributes and Element Associations linking these subordinate Cloud Elements within that collection.
▪ **Cloud Filter.** Cloud Filters provide the user with the control to select one or multiple Cloud Element sets, as extracted from the source material via Cloud Analysis, for consumption, based on specific input parameters and/or algorithmically defined heuristics. Cloud Filter types are numerous, including element frequency (number of occurrences within the specified Cloud Lens reference or frame of view, or the number of occurrences across the entire content sample), word weight and/or complexity (number of letters, syllables, etc.), syntax (grammar-based, part-of-speech, keyword or terminology extraction, word meaning based on context, sentence boundaries, etc.), emotion (happy, sad, angry, etc.), and dynamic range (loudness or level variation), to name a few. Cloud Filters are not limited in their function to the Cloud Elements defined within a specific view as defined by the Cloud Lens. Rather, the scope of the Cloud Filter can be "local" to the specific Cloud Lens view, or the scope of the Cloud filter can be "global" across all of the Cloud Elements derived or extracted from the selected content. This enables the Cloud Filter to properly prioritize (rank) a specific Cloud Element that has significance elsewhere in the overall (global) content sample.
▪ **Cloud Lens.** Cloud Lenses provide controlled views into the content, impacting the viewed density and magnification level of a Graphical Cloud for a given visualization. In some embodiments, the Cloud Lens defines a magnification level of the content representing a fixed time period or sequence length for the construction of the Graphical Cloud. The Cloud Lens bounds the amount of content under consideration for subsequent prioritization and ranking of the potentially displayable Cloud Elements. The Cloud Lens controls the period of time or quantity of media samples to be used for display. In the case of text-based content, the Cloud Lens controls the quantity of text or content sequence length (e.g. number of words, sentences, paragraphs, chapters, etc.) to be used for Cloud Filter assessment and ranking.
▪ **Element Attribute.** Cloud Elements may have additional attributes assigned to them. For example, a transcript of an audio sample would produce a set of word elements, and each of these words could be assigned the appropriate part-of-speech (e.g. noun, pronoun, proper noun, adjective, verb, adverb, etc.) for that specific word in that specific context, as some words can have different meanings and additional attributes in different contexts. Digital signal processing analysis could be performed on audio or video content to determine the variation in amplitude of the audio over a series of words or time period, defining an attribute for those Cloud Elements.
▪ **Element Association.** Cloud Elements may have associations with other Cloud Elements. Examples include a word element that has an adjective attribute and its associated word element with a noun attribute. Another example includes an emotional element attribute ("inquisitive") that may reference the associated word, word phrase or sentence (e.g. a question).
▪ **Visual Noise.** Visual Noise references that, for any specific source of content, only a relatively small percentage of derived Cloud Elements (e.g. words, icons, etc.) are valuable for a given user visual interaction. For example, an hour of audio or video content for a normal speaking rate of 150 to 230 words-per-minute (wpm) represents 9,000 to 14,000 words for that media sample, and the number of important (high ranking) words or keywords from that sample is but a fraction of the total. With the additionally extracted Cloud Elements (e.g. speakers, speaker changes, gestures, emotions, etc.) from that same content sample, the number of potentially redundant, extraneous or erroneous, and therefore not useful, graphical elements can be significant.

### Graphical Cloud Construction

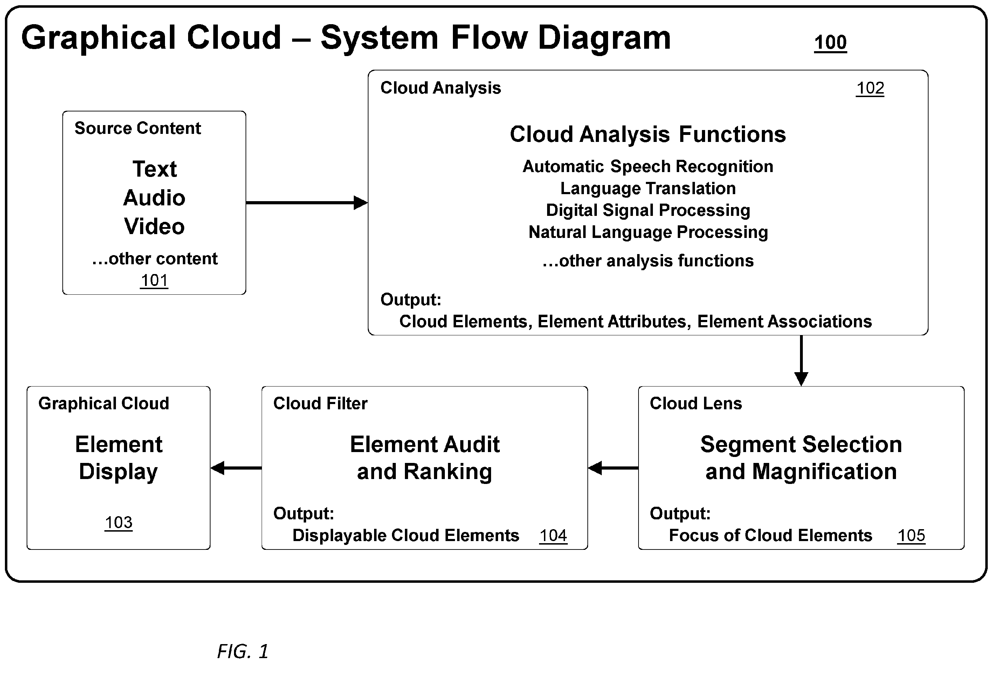

The system 100 is comprised of the primary subsystems as depicted in the system flow diagram FIG.1. Source content 101 is submitted to Cloud Analysis 102, where transformational analyses are performed on the input content, producing a complete set of Cloud Elements, their Element Attributes, and their Element Associations to other Cloud Elements. Further, compound Cloud Elements are constructed based on the Cloud Elements and any Element Attributes and Element Associations.

The logical flow of media and extraction of valuable content follows the following process:
▪ Source content 101 is presented to the Cloud Analysis module 102, which may, if necessary, transform the content into text (e.g. words, phrases and sentences via Automatic Speech Recognition technology), transform the content into a target language (e.g. words, phrases and sentences via language translation technology), or extract varied metadata from the source content (e.g. part-of-speech, speaker change, pitch increase, etc.).
▪ The words and other metadata produced by the Cloud Analysis module either define a Cloud Element, an Element Attribute, or an Element Association. The Cloud Analysis module can be considered a pre-filter that extracts and transforms the source content into these base units for subsequent analysis and processing.
▪ The output of the Cloud Analysis 102 module is presented to the Cloud Lens 105, which determines the subset of Cloud Elements under consideration for eventual graphical visualization. Only Cloud Elements within the time window or segment defined by the Cloud Lens can be displayed in the Graphical Cloud. Further, a focus weight may be applied to the Cloud Elements to apply a larger weight to Cloud Elements in the center of the Cloud Lens as compared to the Cloud Elements that are closer to the edge of the local, lens view. The focus weight of each Cloud Element contributes to the eventual element weight or ranking as determined by the Cloud Filter.
▪ Integrated within Cloud Analysis, manual or human-generated transcripts can be enhanced with automatic speech recognition (ASR) to produce very accurate timing for these human-generated solutions, thereby insuring that any type of transcript can be accurately synchronized to the media for subsequent transformation and analysis to construct interactive Graphical Clouds.
▪ The Cloud Elements with associated focus weights and other metadata (e.g. part-of-speech attribute, etc.) are presented to the Cloud Filter 104, which applies rules to assess and establish each Cloud Element's rank or weight. The Cloud Filter also determines based on Element Attributes and Element Associations what constitutes a compound Cloud Element and assigns a rank to the compound Cloud Element as well. The output of the Cloud Filter is a ranked and therefore ordered list of Cloud Elements, including compound Cloud Elements, all of which are presented to the element display 103 for the construction of the Graphical Cloud visualization.
▪ Although the Cloud Lens 105 specifies a subset of Cloud Elements for analysis and ranking by the Cloud Filter 104, the Cloud Filter also retains access to the complete set of Cloud Elements from the input source content in order to further tune the Cloud Element ranking within the segment or time window. This global context of all Cloud Elements allows the Cloud Filter to assess the frequency of occurrence of specific Cloud Elements when determining specific rank. For example, if a specific word occurs just once in a given Cloud Lens segment yet has a high frequency of occurrence throughout the media sample, the relative weight applied to that specific word Cloud Element would be higher than it would be if only the local context was considered.
▪ The Graphical Cloud 103 is comprised of a subset of Cloud Elements, including compound Cloud Elements, limited by the Cloud Lens 105 with further visual emphasis placed on the elements within this collection that have the highest-rank.
▪ The Graphical Cloud 103 takes into consideration the Cloud Lens 105 view defining the allowable density of visual components, the underlying language rules that define reading orientation, which for English is left-to-right and top-to-bottom. For example, a word that is determined to be relevant to the content, either locally within the Cloud Lens view or globally across the entire content sample, may be displayed in a brighter and larger font (for text) or a larger graphical element (e.g. icons, avatars, emoji, etc.).
▪ The content is synchronized such that each element from the Graphical Cloud 103 is tied to the specific content or media location for detailed review, and in the case of audio and video, synchronized playback. Synchronization works in both directions, as the user can access the audio waveform, video playback progress bar, or the text-based content to index within the varied time ordered and segmented Graphical Clouds. The user can also access the Graphical Cloud elements to begin playback of the media, for audio and video content, or to appropriately index into the text-based content.

### Cloud Analysis Functions

The following is a partial list of transformational processes and analysis techniques can be applied to the varied content sources to produce compelling Cloud Elements, including their Element Attributes and Element Associations:
▪ Automatic Speech Recognition (ASR)
▪ Language Translation
▪ Natural Language Processing (NLP)
▪ Natural Language Understanding
▪ Computational Linguistics (CL)
▪ Cognitive Neuroscience
▪ Cognitive Computing
▪ Artificial Intelligence (AI)
▪ Digital Signal Processing (DSP)
▪ Image Processing
▪ Pattern Recognition
▪ Optical Character Recognition (OCR)
▪ Optical Word Recognition

Limitations on the performance (e.g. accuracy) of these analysis techniques play a significant role in the extraction, formation, and composition of Cloud Elements. For example, Automatic Speech Recognition (ASR) systems are measured on how accurate the transcript matches the source content. Conditions that significantly impact ASR performance, as measured by its word error rate, include speaker's accent, crosstalk (multiple speakers talking at once), background noise, recorded amplitude levels, sampling frequency for the conversion of analog audio into a digital format, specific or custom vocabularies, jargon, technical or industry specific terms, etc. Modern ASR systems produce confidence or accuracy scores as part of the output information produced, and these confidence scores remain as attributes for the resulting Element Clouds and impact the significance rank produced by the Cloud Filter.

### Cloud Lens, Window, Sequence, Perspective and Density

The Cloud Lens provides a specific view into the media, defining a specific magnification level into the entire source content. Fully expanding the Cloud Lens allows the user to view a Graphical Cloud for the entire content sample (e.g. a single Graphical Cloud for an entire 90-minute video). Magnification through the Cloud Lens allows the user to view a Graphical Cloud that represents only a portion or segment or the entire content sample. These segments can be of any size. Further segments can be consecutive, implying the end of one segment is the beginning of the next segment. Or, segments can be overlapping, allowing for a near continuous transformation of the resulting Graphical Cloud based on an incrementally changing set of Cloud Elements depicted in the actively displayed Graphical Cloud.

Combine the magnification setting as defined by the Cloud Lens with the complexity and controls defined by the Cloud Filter and the "density" of Cloud Elements within a specified segment is defined. This level of control allows the user to determine how much content is being displayed at any given time, thereby presenting an appropriate level of detail or relevance for each specific use case.

### Cloud Filter, Eye Fixation, Skimming and Reading Speeds

A significant consideration for construction of the Graphical Cloud and element-ranking algorithm used within the Cloud Filter is that the human eye can see, in a single fixation, a limited number of words, and some studies indicate that for most people, the upper bound for this eye fixation process is typically three words, although this limit varies based on a person's vision span and vocabulary. Thus, there is a benefit to keep important word phrase length limited and to maintain or develop Element Attributes and Associations allowing for word-pairs (element-pairs) and word-triplets (element-triplets) to be displayed in the Graphical Cloud when these rank high enough within the specific Cloud Filter's design. In some views defined by the Cloud Lens, the Cloud Filter will only display isolated Cloud Elements. But when that Cloud Lens extends the view sufficiently, there is a significant, positive impact on understanding and value from the inclusion of compound Cloud Elements as ranked by the Cloud Filter.

Understanding the effects of human perception and eye fixation helps in designing effective Cloud Filters, as the goal of the Graphic Cloud is the ability to efficiently scan for relevant element clusters, with that relevancy dependent on the specific needs of that user. Maintaining element associations and displaying the correct number of elements that fit within the bounds of what people are able to immediately view increases identification and interpretation speeds. With the techniques disclosed herein, a significant reduction in Visual Noise (i.e. visual element clutter), with appropriate visual spacing for optimal eye tracking, and with the value of reading multiple elements (words or other element types) in a single eye fixation, can lead to even greater efficiencies for the user to extract value from the content.

### Cloud Filter Embodiment via Frequency, Complexity and Grammar-Derived Attributes

A representative Cloud Filter includes tracking a variety of parameters derived from varied analyses. An example Cloud Filter includes, for text-based content or text derived from other content sources, a word complexity and frequency determination and a first-order grammar-based analysis. From each of these processes, each element in the Graphical Cloud is given an element-rank. From that rank, the user display is constructed highlighting the more relevant elements extracted from the content.

A sample word- word-phrase- element-ranking analysis can be constructed by determining word complexity and frequency of occurrence of each word and word phrase within the specific Graphical Cloud segment or across the entire media sample. Word complexity can be as simple as a count of the number of letters or syllables that make up the specific word. Element-rank is directly proportional to the complexity of a given element or the frequency of occurrence of that element. Any filter metric can be considered "local" to just the segment or "global" if it references content analyzed across the entire media sample.

A first-order grammar-based analysis can be performed on the text content to determine parts-of-speech. An example algorithm is described that could be used to construct the appropriate Cloud Elements to be used by the Cloud Filter:
▪ Analyze text to determine parts-of-speech, including for the English language: noun, verb, article, adjective, preposition, pronoun, adverb, conjunction and interjection. Extensive linguistic work provides many more separate parts of speech. This analysis is also different for other languages, so language-specific determination of parts-of-speech is relevant to one type of Cloud Filter.
▪ Add an element-rank factor to each word based on part-of-speech. For example, for the English language, a noun is often the centerpiece for each sentence, and as such, an incremental increase in element-rank applied when compared to element-rank for other parts of speech. This part-of-speech rank would be an attribute of the specific word defined base on the output of the Cloud Analysis.
▪ The part-of-speech rank differs for each part of speech and is prioritized. For the English language, the following is one prioritized order, from highest to lowest: proper nouns, nouns, verbs, adjectives, adverbs, others. These attributes, defined during Cloud Analysis, and utilized in the element ranking by the Cloud Filter.
▪ In the same way, parts-of-speech can provide attributes that augment an object, other parts-of-speech can provide attributes that augment the action being taken, another attribute, or yet other parts-of-speech. For the English language, these are adverbs, and they qualify an adjective, verb, other adverbs, or other groups of words. The determination of the association between these "adverb" parts-of-speech can be useful in the construction of a compound Cloud Element and its visualization.
▪ Apply the attribute-rank factor to the frequency and complexity rank already determined for each Cloud Element in the Graphical Cloud.
▪ Based on the Cloud Lens, determine the active window into the content, determine the density of Cloud Elements to be displayed. Based on the Cloud Filter, determine the element-rankings and derived component Cloud Elements, and construct the visual Graphical Cloud.
▪ Based on key Element Associations for highly ranked Cloud Elements, associated elements can be displayed even when the element-ranking for that associated element is not sufficiently high enough for the given display.
▪ To support enhanced visual comprehension of displayed Cloud Elements, a graphical weighting of these elements is implemented, including the following element types: words, word-pairs, word-triplets and any other word phrases displayed. For example, muted colors and smaller fonts are used for adjectives and adverbs as compared to the brighter color and larger font schemes for the nouns and verbs that they reference. The most prominent Cloud Elements based element-ranking are displayed in the largest, brightest, most pronounced graphical scheme.
▪ A further visual enhancement for highly-prioritized word elements is to have increasing or decreasing font size within a specific word to reflect other signal processing metrics.

For example, increasing or decreasing pitch can determine font size changes within specific words or phrases.

The following sentence demonstrates the value of understanding core grammatical parts-of-speech for the construction of Cloud Elements, which in turn, are displayed appropriately, and potentially differently, based on specific filter parameters. Cloud Elements are displayed based to the nature of the Cloud Filter and inputs to the system in terms of "element density" for a given visualization. The following English-language sentence depicts valuable content for construction of a compound Cloud Element and consumption of that Cloud Element by the Cloud Filter:
**John Williams could not complete the task because of his tremendously heavy workload.**

From the reference sentence above, the nouns are "John", "Williams", "task" and "workload". As such, each will have a high element-rank for the example Cloud Filter embodiment. The verb "complete" is next in level of importance or rank. Adverb "tremendously" and adjective "heavy" are equally ranked and lower than nouns and verbs. However, each has an association, "tremendously" to "heavy" and "heavy" to "workload". These associations form the compound Cloud Element, composed of three subordinate Cloud Elements associated with the phrase "tremendously heavy workload".

As such, the compound Cloud Element "tremendously heavy workload" could be displayed together in one filter embodiment, given the Cloud Lens state, to produce a more meaningful display to the user as compared to the single, important noun "workload". Further, eye fixation is defined by the fact that humans can often see multiple words for a given instantaneous view of the content. As such, the user can potentially interpret "tremendously heavy workload" in a single view (eye fixation), thereby increasing the relevance of the display.

This algorithm can be extended in numerous ways as more and more analytical functions are applied to the content to create more Cloud Elements, with corresponding Element Attributes and Element Associations. Further extensions can be applied as new element types (e.g. gestures, emotions, tone, intent, amplitude, etc.) are constructed, adding to the richness of a Graphical Cloud visualization.

### Graphical Cloud Composition

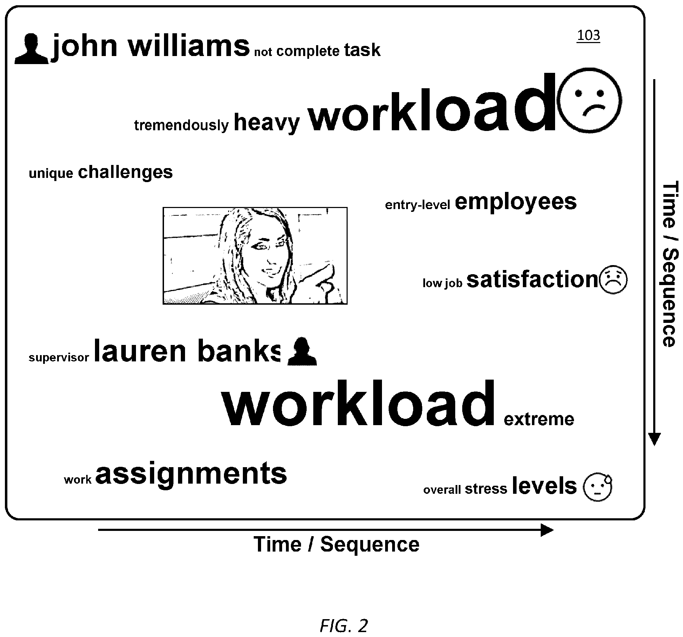

The Graphical Cloud 103 is constructed over a given period of time or sequence of the content, as selected by the user. FIG. 2 depicts a transformation and graphical display 103 of the Graphical Cloud representation derived from the sample content. The resulting Graphical Cloud for this example depicts Cloud Elements that are words, phrases, icons, select persona or avatars, emotional state (emoji), as well as Element Attributes and Element Associations that combine individual Cloud Elements into compound Cloud Elements (e.g. word-pairs, word-triplets, etc.), and Cloud Attributes (e.g. proper nouns) to appropriately rank the Cloud Elements, as defined by the Cloud Filter.

FIG 2. depicts a Graphical Cloud constructed from the following example text:
*"John Williams could not complete the task because of his tremendously heavy workload.*
*This is another example of the unique challenges for entry-level employees, leading to low job satisfaction.*
*His supervisor, Lauren Banks, provides guidance, yet her workload is extreme too.*
*Management needs to review work assignments given overall stress levels!"*

Consider this time or sequence a level of magnification or zoom into the content. For example, the magnification or zoom level could represent 5 minutes of a 60-minute audio or video sample. Independent of this "zoom level" is the word density of the specific Graphical Cloud, all configured and controlled by the Cloud Lens and Cloud Filter. That is, for a given media segment (i.e. 5 minutes of a 60 minute media file), the number of elements (e.g. words) displayed within that segment can vary, defining the element density for that given Graphical Cloud view.

### Graphical Cloud Translation

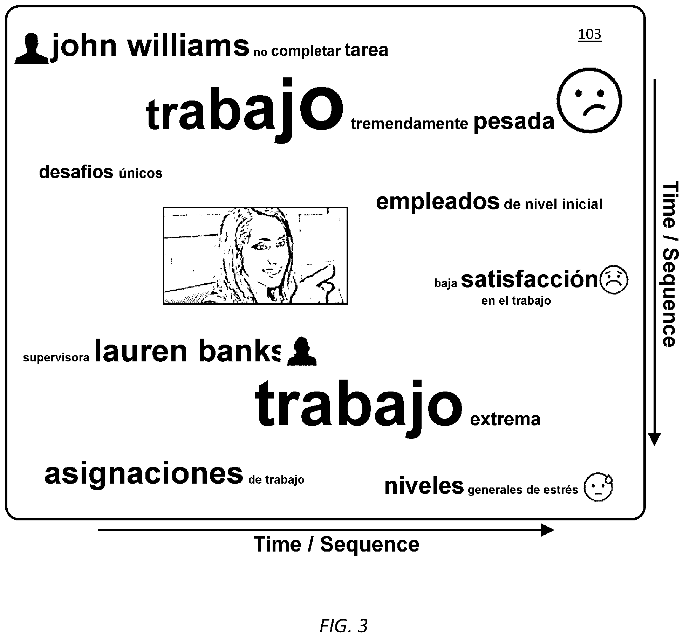

Language translation solutions can be applied to the source content, either the output of an automatic speech recognition system applied to the source audio or video content or to an input sourced transcript of the input audio or video content. The output of the language translation solution is then applied to other Cloud Analysis modules, including the use of natural language processing in order to determine appropriate word order within the compound Cloud Element. The output of this process is depicted in FIG. 3 showing Graphical Cloud display 103, highlighting the language translation application with appropriate Spanish translation and word order.

FIG 3. depicts a Graphical Cloud constructed from the following, translated example text:
*"John Williams no pudo completar la tarea debido a su carga de trabajo tremendamente pesada.*
*Este es otro ejemplo de los desafios únicos para los empleados de nivel inicial, que conduce a una baja satisfacción en el trabajo.*
*Su supervisora, Lauren Banks, proporciona orientación, pero su carga de trabajo es extrema también*
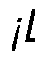 *La gerencia necesita revisar las asignaciones de trabajo dados los niveles generales de estrés!"*

The input source can be translated on a word, phrase or sentence basis, although some context may be lost when limiting the input content for translation. A more comprehensive approach is to translate the content en masse, producing a complete transcript for the input text segment, as shown in the figure. Other Cloud Analysis techniques are language independent, including many digital signal processing techniques that extract speaking rate, speech level, dynamic range, speaker identification, to name a few.

The process applied to the translated text and input source content produces the complete set of Cloud Elements, with their Element Attributes, and Element Associations. The resulting collection of compound Cloud Elements and individual Cloud Elements is then submitted to the Cloud Lens and Cloud Filters to produce the translated Graphical Cloud.

### User Supplied Keywords and Triggers

An alternative embodiment could include the ability to preset or provide a list of keywords relevant to the application or content to be processed. For example, a lecturer could provide keywords for that lecture or for the educational term, and these keywords could be provided for the processing of each video used in the transformation and creation of the associated Graphical Clouds. An additional example could include real-time streaming applications where content is being monitored for a variety of different applications (e.g. security monitoring applications). For each unique application in this streaming example, the "trigger" words for that application may differ and could be provided to the system to modify the Cloud Filter's element-ranking and subsequent and resulting real-time Graphical Clouds. Additionally, the consumer of the content could maintain a list of relevant or important keywords as part of their account profile, thereby allowing for an automatic adjustment of keyword content for generation of Graphical Clouds.

Keywords provided to the system can demonstrably morph the composition of the resulting Graphical Clouds, as these keywords would by definition rank highest within the constructed Graphical Clouds. Scanning the Graphical Clouds through the media piece can also be further enhanced through special visual treatment for these keywords, further enhancing the efficiency in processing media content. Note that scanning or skimming text is four to five times faster than reading or speaking verbal content, so the Graphical Cloud scanning feature adds to that multiplier given the reduction of text content being scanned. Thus the total efficiency multiplier could be as high as 10 times or more for the identification of important or desired media segments or for visually scanning for overall meaning, essence or gist of the content.

Edit distance integrated into the system can enhance use of user-defined keywords. Transcripts produced via automatic means (e.g. ASR) can have lower word accuracy, and an edit distance with a predetermined threshold (i.e. threshold on number of string operations required) can be utilized to automatically substitute an erroneous ASR output for the likely keyword, allowing for the display (or other action) of that keyword in the resulting Graphical Cloud.

### Non Word-based Triggers

The disclosed techniques along with Cloud Analysis have the potential to generate compelling and interesting Cloud Elements that include emotions, gestures, audio markers, etc. Extending the concept of user supplied keywords is the concept of allowing the user to indicate elements from within the source content that are relevant to their visualization need and experience. For example, scanning the Graphical Cloud for areas in the audio sample where there were large changes in audio levels, indicating a potentially engaging dialog between participants.

### Graphical Cloud Component Diagram

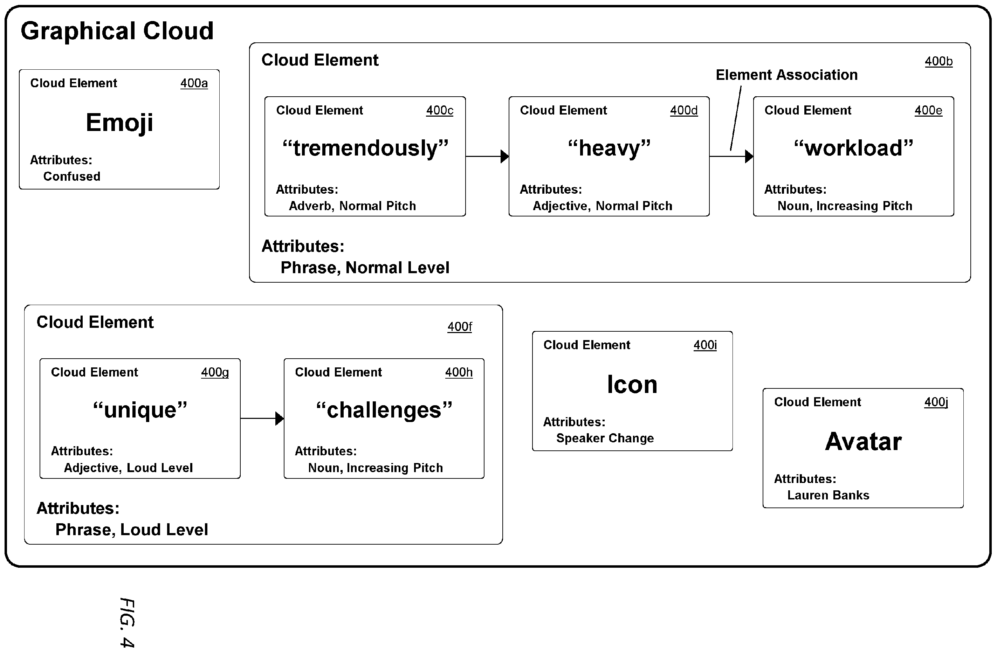

FIG. 4 depicts a representative Graphical Cloud, comprised of Cloud Elements (400a - 400j) and includes compound Cloud Elements (400b and 400f), which in turn are Cloud Elements and a collection of associated Cloud Elements. Each Cloud Element can have one to many Element Attributes and one to many Element Associations, based on the varied analysis performed on the source media content (e.g. audio, video, text, etc.). As depicted, Element Attributes and Element Associations support the formation of compound Cloud Elements.

The number of Cloud Elements within a compound Cloud Element is dependent on the importance of the Element Associations in addition to the control parameters for the Cloud Filter and Cloud Lens, defining the density of Cloud Elements that are to be displayed within a given Graphical Cloud for a given time period or sequence of content. As such, the compound Cloud Element may not be depicted in a given Graphical Cloud at all, or only the primary, independent Cloud Element may be displayed, or all of the Cloud Elements may be displayed.

### Example Display - Video View 1

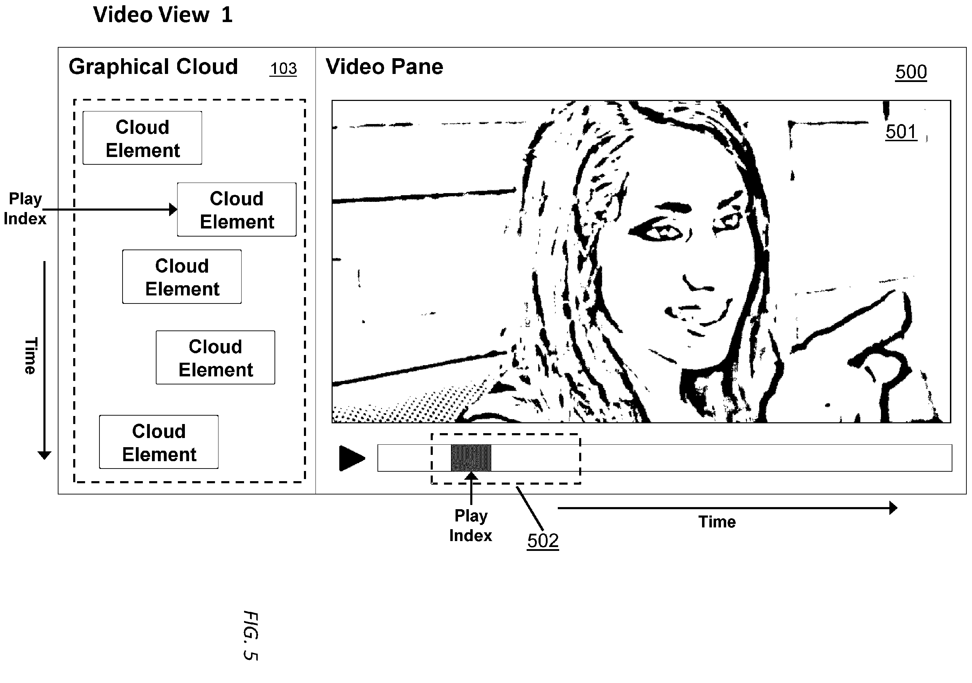

FIG. 5 depicts an example visualization (Graphical Cloud 103) with each of the major components for a video display embodiment. The video pane 500 contains the video player 501, which is of a type that is used within web browsers to display video content (e.g. YouTube or Vimeo videos). In this video pane 500, time goes from left to right. For this embodiment, as the video plays, the Graphical Cloud 103 visualization scrolls to remain relevant and synchronized to what's being displayed within the video content.

The left pane displays the constructed Graphical Cloud 103 for a selected view on the timeline for the video, and the Graphical Cloud elements are synchronized with the video content depicted in right video pane 500. The corresponding time window as represented by the Graphical Cloud view is also shown in the video pane by the dashed-line rectangle 502. The size of the video pane dashed line area is defined by the Cloud Lens 105, with settings controlled by the user relative to level of content view magnification.

Other embodiments can be extended to include tags and markers within the audio and video playback to allow the user to annotate (with tags) or mark locations already identified through scanning the Graphical Cloud, viewing the video or both.

### Example Display - Video View 2

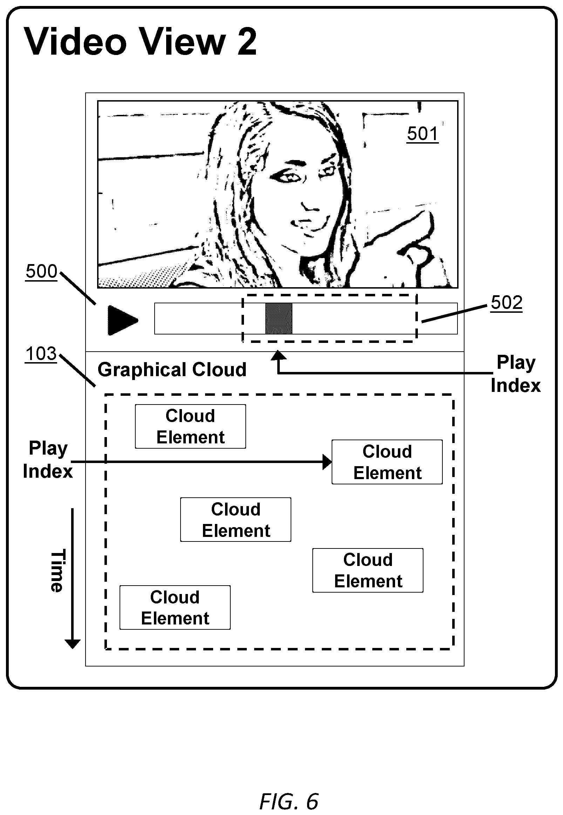

FIG. 6 depicts an example Graphical Cloud 103 of a type appropriate to a mobile video view. The video player 501 is shown at the top of the display, followed by a section for positional markers and annotation tabs. The lower portion of the view is the Graphical Cloud displaying the corresponding time for the constructed Graphical Cloud as depicted in the dashed rectangle 502.

### Audio Display (View)

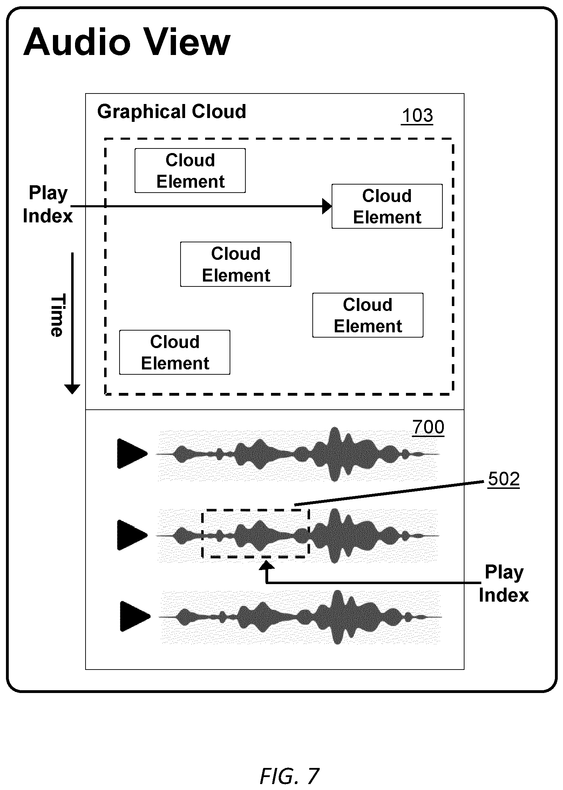

FIG. 7 depicts an example Graphical Cloud display 103 implementation, with the Graphical Cloud displayed above one or more audio waveforms 700. As with the mobile and web video views, a dashed rectangular display 502 is depicted over the waveform to show the period of time for a given Graphical Cloud display.

### Time Periods & Word Density

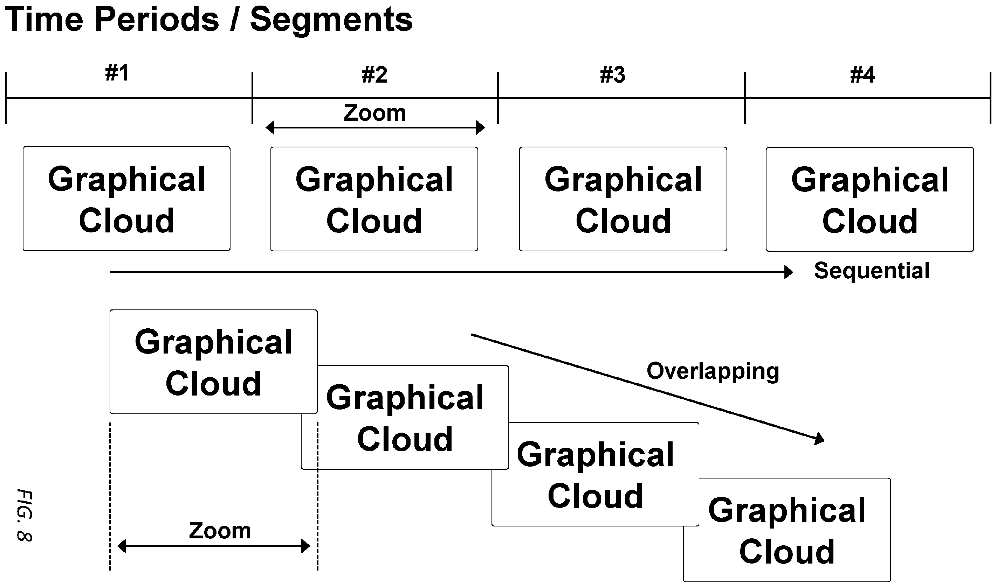

The Graphical Clouds are generated over some period of time (window) or a select sequence of content based on how the user has chosen to configure their experience. There are multiple ways to construct each specific Graphical Cloud as the user scrolls through the media content. FIG. 8 depicts two such time segment definitions, sequential and overlapping. The duration of a given segment or window is defined by the magnification or "zoom" level that the user has selected (via the Cloud Lens). For example, the user could opt to view 5 minutes or 8 minutes of audio for each segmented Graphical Cloud. The Graphical Cloud constructed for that specific 5-minute or 8-minute segment would be representative of the transcript for that period of time based on an element-ranking algorithm.

Newly constructed Graphical Clouds could be constructed and displayed en masse (sequential segments) or could incrementally change based on the changes happening within each specific Graphical Cloud (overlapping segments). Graphically interesting and compelling displays can be used to animate these changes as the user moves through the media, either by scrolling through the time associated Graphical Clouds or by scrolling through the media indexing as is typical with today's standard audio and video players.

Depending on the embodiment, certain acts, events, or functions of any of the processes described herein can be performed in a different sequence, can be added, merged, or left out altogether (e.g., not all described acts or events are necessary for the practice of the process). Moreover, in certain embodiments, acts or events can be performed concurrently, e.g., through multi-threaded processing, interrupt processing, or multiple processors or processor cores or on other parallel architectures, rather than sequentially.

The various illustrative logical blocks, modules, and process steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

The various illustrative logical blocks and modules described in connection with the embodiments disclosed herein can be implemented or performed by a machine, such as a processor configured with specific instructions, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combinations of the same, or the like. A processor can also be implemented as a combination of computing devices, e.g., a combination of a DSP and a microprocessor, a plurality of microprocessors, one or more microprocessors in conjunction with a DSP core, or any other such configuration.

The elements of a method or process described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of computer-readable storage medium known in the art. An exemplary storage medium can be coupled to the processor such that the processor can read information from, and write information to, the storage medium. In the alternative, the storage medium can be integral to the processor. The processor and the storage medium can reside in an ASIC. A software module can comprise computer-executable instructions which cause a hardware processor to execute the computer-executable instruction.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment. The terms "comprising," "including," "having," "involving," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y or Z," unless specifically stated otherwise, is otherwise understood with the context as used in general to present that an item, term, etc., may be either X, Y or Z, or any combination thereof (e.g., X, Y and/or Z). Thus, such disjunctive language is not generally intended to, and should not, imply that certain embodiments require at least one of X, at least one of Y or at least one of Z to each be present

The terms "about" or "approximate" and the like are synonymous and are used to indicate that the value modified by the term has an understood range associated with it, where the range can be ±20%, ±15%, ±10%, ±5%, or ±1%. The term "substantially" is used to indicate that a result (e.g., measurement value) is close to a targeted value, where close can mean, for example, the result is within 80% of the value, within 90% of the value, within 95% of the value, or within 99% of the value.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C.

While the above detailed description has shown, described, and pointed out novel features as applied to illustrative embodiments, it will be understood that various omissions, substitutions, and changes in the form and details processes illustrated can be made without departing from the spirit of the disclosure. As will be recognized, certain embodiments described herein can be embodied within a form that does not provide all of the features and benefits set forth herein, as some features can be used or practiced separately from others. All changes which come within the meaning and range of equivalency of the claims are to be embraced within their scope.

Further preferred embodiments are described below:
1. Embodiment 1 being a process for extracting and displaying relevant information from a content source, comprising:
   Acquiring content from at least one of a real-time stream or a pre-recorded store;
   Specifying a Cloud Lens defining at least one of a segment duration or length, wherein the segment comprises at least one of all or a subset of at least one of a total number of time or sequence ordered Cloud Elements;
   Applying at least one Cloud Filter to rank the level of significance of each Cloud Element associated with a given segment;
   Defining a number of Cloud Elements to be used in a Graphical Cloud for a given segment based on a predetermined Cloud Element density selected;
   Constructing at least one Graphical Cloud comprising a visualization derived from the content that is comprised of filtered Cloud Elements; and,
   Scrolling the Cloud Lens through segments to display the Graphical Cloud of significant Cloud Elements.
2. The process of embodiment 1 wherein Cloud Elements are derived from source content through at least one of transformation or analysis and comprise at least one of graphical elements including words, word phrases, complete sentences, icons, avatars, emojis, representing words or phrases at least one of spoken or written, emotions expressed, speaker's intent, speaker's tone, speaker's inflection, speaker's mood, speaker change, speaker identifications, object identifications, meanings derived, active gestures, derived color palettes, or other material characteristics that can be derived through transformational and analysis of the source content or transformational content.
3. The process of embodiment 1 wherein scrolling is performed through segments, where segments are defined by either consecutive or overlapping groups of Cloud Elements.
4. The process of embodiment 1 wherein Cloud Filters comprise at least one of Cloud Element frequency including number of occurrences within the specified Cloud Lens segment, the number of occurrences across the entire content sample, word weight, complexity including number of letters, syllables, etc., syntax including grammar-based, part-of-speech, keyword, terminology extraction, word meaning based on context, sentence boundaries, emotion, or change in audio or video amplitude including loudness or level variation.
5. The process of embodiment 1 wherein the content comprises at least one of audio, video or text.
6. The process of embodiment 5 wherein the content is at least one of text. audio, and video, and the audio/video is transformed to text, using at least one of transcription, automated transcription or a combination of both.
7. The process of embodiment 1 wherein transformations and analysis determines at least one of Element Attributes or Element Associations for Cloud Elements, which support the Cloud Filter ranking of Cloud Elements including part-of-speech tag rank, or when present, may form the basis to combine multiple, subordinate Cloud Elements into a single compound Cloud Element.
8. The process of embodiment 7 wherein text Cloud Elements comprise at least one of Element Attributes comprising a part-of-speech tag including for English language, noun, proper noun, adjective, verb, adverb, pronoun, preposition, conjunction, interjection, or article.
9. The process of embodiment 7 wherein text Cloud Elements comprise at least one of Element Associations based on at least one of a part-of-speech attribute including noun, adjective, or adverb and its associated word Cloud Element with a corresponding attribute including pronoun, noun or adjective.
10. The process of embodiment 7 wherein Syntax Analysis to extract grammar based components is applied to the transformational output text comprising at least one part-of-speech, including noun, verb, adjective, and others, parsing of sentence components, and sentence breaking, wherein Syntax Analysis includes tracking indirect references, including the association based on parts-of-speech, thereby defining Element Attributes and Element Associations.
11. The process of embodiment 7 wherein Semantic Analysis to extract meaning of individual words is applied comprising at least one of recognition of proper names, the application of optical character recognition (OCR) to determine the corresponding text, or associations between words including relationship extraction, thereby defining Element Attributes and Element Associations.
12. The process of embodiment 6 wherein Digital Signal Processing is applied to produce metrics comprising at least one of signal amplitude, dynamic range, including speech levels and speech level ranges (for audio and video), visual gestures (video), speaker identification (audio and video), speaker change (audio and video), speaker tone, speaker inflection, person identification (audio and video), color scheme (video), pitch variation (audio and video) and speaking rate (audio and video).
13. The process of embodiment 6 wherein Emotional Analysis is applied to estimate emotional states.
14. The process of embodiment 7 wherein the Cloud Filter comprises:
   Determining an element-rank factor assigned to each Cloud Element, based on results from content transformations and Natural Language Processing analysis, prioritized part-of-speech Element Attributes from highest to lowest: proper nouns, nouns, verbs, adjectives, adverbs, and others;
   Applying the element-rank factor to the Cloud Element significance rank already determined for each word element in the Graphical Cloud.
15. The process of embodiment 7 further comprising implementing a graphical weighting of Cloud Elements, including words, word-pairs, word-triplets and other word phrases wherein muted colors and smaller fonts are used for lower ranked elements and brighter color and larger font schemes for higher ranked elements, with the most prominent Cloud Elements based element-ranking displayed in the largest, brightest, most pronounced graphical scheme.
16. The process of embodiment 1 wherein as the Cloud Lens is scrolled through the content, the segments displayed are at least one of consecutive, with the end of one segment is the beginning of the next segment, or overlapping, providing a substantially continuous transformation of the resulting Graphical Cloud based on an incrementally changing set of Cloud Elements depicted in the active Graphical Cloud.
17. The process of embodiment 1 further comprising combining a segment length defined by the Cloud Lens with a ranking criteria for the Cloud Filter to define the density of Cloud Elements within a displayed segment is defined.
18. The process of embodiment 7 wherein the Cloud Filter includes assigning highest ranking to predetermined keywords.
19. The process of embodiment 18 wherein predetermined visual treatment is applied to display of keywords.
20. The process of embodiment 1 wherein each element displayed in the Graphical Cloud is synchronized with the content, whereby selecting a displayed element will cause playback or display of the content containing the selected element.
21. The process of embodiment 7 wherein the Cloud Filter portion of the process comprises:

The process of embodiment 1 comprising: setting a visual spacing between one of single or compound cloud elements, the number of elements within the compound element chosen to fall within known eye fixation bounds, and the visual spacing chosen to provide visual isolation between cloud elements.

The process of embodiment 1 comprising receiving user input for changing cloud element displayed density according to user preference for visual spacing above the minimum a process determined for visual spacing.

The process of embodiment 1 comprising displaying cloud elements whereby cloud elements within a graphical cloud display visualization maintain their content-ordered placement across and within all displayed cloud elements, wherein content-ordered is time-ordered for audio and video content and sequence-ordered for text content.

## Claims

1. A process for extracting and displaying relevant information from a content source being at least one of a real-time stream or a pre-recorded store as at least one Graphical Cloud, comprising:
Acquiring source content from the content source being at least one of a real-time stream or a pre-recorded store, wherein the content includes at least one of audio, video, or text;
Submitting the source content to a Cloud Analysis being a technique to derive Cloud Elements, being visual components that make up the Graphical Cloud, their Element Attributes, and their Element Associations to other Cloud Elements from the source content via transformation or analysis and include graphical elements to the Cloud Elements;
Constructing Compound Cloud Elements as a collection of Cloud Elements, based on their Element Attributes and their Element Associations linking these subordinate Cloud Elements;
Setting a Cloud Lens providing controlled views into the content, defining the set of potential Cloud Elements for display, and defining at least one of a duration or a length of a segment being a portion of the acquired source content, wherein the segment comprises at least one of all or a subset of at least one of a total number of time-ordered or sequence-ordered Cloud Elements;
Applying at least one Cloud Filter to rank a level of significance of each Cloud Element associated with a given segment;
Defining a number of Cloud Elements to be used in a Graphical Cloud for a given segment based on a predetermined Cloud Element density selected;
Constructing the at least one Graphical Cloud comprising a visualization derived from the source content that is comprised of the filtered Cloud Elements;
Scrolling the Cloud Lens through a subset of the segments or a segment of the entire content to display the Graphical Cloud of significant Cloud Elements within each segment; and
Defining the density of Cloud Elements within a displayed segment by combining a segment length defined by the Cloud Lens with a ranking criteria for the Cloud Filter, whereby a visual spacing between the displayed Cloud Elements or the displayed Compound Cloud Elements is set to allow eye fixation.

2. The process of claim 1 wherein speech portions of the audio/video are transformed to text, using at least one of automatic speech recognition, automated transcription, or a combination of both.

3. The process of claim 1 comprising synchronizing each Cloud Element displayed in the Graphical Cloud with the content, whereby selecting a displayed element will cause playback or display of the content containing the selected element.

4. The process of claim 2 wherein Cloud Elements comprise:
Extracting at least one of graphical elements including words, icons, avatars, emojis, representing words or phrases at least one of spoken or written, emotions expressed, speaker's intent, speaker's tone, speaker's inflection, speaker's mood, speaker change, speaker identifications, object identifications, meanings derived, active gestures, or derived color palettes; and
Assigning individual graphical elements, including words, icons, avatars, or emojis to a Cloud Element.

5. The process of claim 1 wherein scrolling is performed through segments, where segments displayed are at least one of consecutive, with the end of one segment is the beginning of the next segment, or overlapping, providing a substantially continuous transformation of the resulting Graphical Cloud based on an incrementally changing set of Cloud Elements depicted in the displayed Graphical Cloud.

6. The process of claim 2 wherein the at least one Cloud Filter comprises at least one of Cloud Element frequency including number of occurrences within the specified Cloud Lens segment, the number of occurrences across the entire content sample, word weight, complexity including number of letters, syllables, syntax including grammar-based, part-of-speech, keyword, terminology extraction, word meaning based on context, sentence boundaries, emotion, or change in audio or video amplitude including loudness or level variation.

7. The process of claim 1 wherein transformations and analysis determine at least one of the Element Attributes or the Element Associations for the Cloud Elements, which support the Cloud Filter ranking of the Cloud Elements including part-of-speech tag rank, or when present, may form the basis to combine multiple, subordinate Cloud Elements into a single compound Cloud Element.

8. The process of claim 7 wherein text Cloud Elements comprise at least one of Element Attributes comprising a part-of-speech tag including for English language, noun, proper noun, adjective, verb, adverb, pronoun, preposition, conjunction, interjection, or article, or at least one of Element Associations based on at least one of a part-of-speech attribute including noun, adjective, or adverb and its associated word Cloud Element with a corresponding attribute including pronoun, noun or adjective.

9. The process of claim 7 wherein Syntax Analysis to extract grammar-based components is applied to the transformational output text comprising at least one part-of-speech, including noun, verb, adjective, and others, parsing of sentence components, and sentence breaking, wherein Syntax Analysis includes tracking indirect references, including the association based on parts-of-speech, thereby defining Element Attributes and Element Associations.

10. The process of claim 7 wherein Semantic Analysis to extract meaning of individual words is applied comprising at least one of recognition of proper names, the application of optical character recognition (OCR) to determine the corresponding text, or associations between words including relationship extraction, thereby defining Element Attributes and Element Associations.

11. The process of claim 1 wherein the audio/video is transformed to text, using at least one of transcription, automated transcription or a combination of both and Digital Signal Processing is applied to produce metrics comprising at least one of signal amplitude, dynamic range, including speech levels and speech level ranges for at least one of audio or video, visual gestures for video, speaker identification for at least one of audio or video, speaker change for at least one of audio or video, speaker tone, speaker inflection, person identification for at least one of audio or video, color scheme for video), pitch variation for at least one of audio or video and speaking rate for at least one of audio or video.

12. The process of claim 1 wherein the cloud filter includes determining an element-rank factor assigned to each Cloud Element, based on results from content transformations and Natural Language Processing analysis, prioritized part-of-speech Element Attributes from highest to lowest: proper nouns, nouns, verbs, adjectives, adverbs, and others; and applying the element-rank factor to the frequency and complexity Cloud Element significance rank already determined for each word element in the Graphical Cloud.

13. The process of claim 7 wherein the Cloud Filter includes assigning highest ranking to predetermined keywords, wherein predetermined visual treatment is applied to display of keywords.

14. The process of claim 7 wherein the Cloud Filter portion of the process comprises:
Determining an element-rank factor assigned to each Cloud Element, based on results from content transformations including automatic speech recognition (ASR) confidence scores and/or other ASR metrics for audio and video-based content.
Applying the element-rank factor to the Cloud Element significance rank already determined for each word element in the Graphical Cloud.

15. The process of claim 1 wherein the process is a digital process executing on a computing or logic device.
